# EUROPÄISCHE PATENTSCHRIFT

(11) **EP 3 945 069 B1**
(45) Veröffentlichungstag und Bekanntmachung des Hinweises auf die Patenterteilung: **08.10.2025**
(21) Anmeldenummer: 21170816.9
(22) Anmeldetag: 28.04.2021
(51) Int. Cl.: C02F 1/00, E03B 3/18

(54) **VERFAHREN ZUR MONTAGE EINER FILTERANORDNUNG**
METHOD FOR MOUNTING A FILTER ASSEMBLY
PROCÉDÉ POUR LA MONTAGE D'UN AGENCEMENT DE FILTRE

(30) Priorität: 30.07.2020 DE 202020104407 U
(43) Veröffentlichungstag der Anmeldung: 02.02.2022
(73) Patentinhaber: IEG - Technologie GmbH, 73344 Gruibingen (DE)
(72) Erfinder: Alesi, Dr., Eduard J., 73344 Gruibingen (DE)
(74) Vertreter: Ruckh, Rainer Gerhard

(56) Entgegenhaltungen:
- EP-A1- 0 648 914
- BE-A4- 1 004 706
- CN-A- 105 298 490
- DE-U1- 29 518 645
- US-A- 5 646 337
- US-A1- 2013 277 053

## Beschreibung

Die Erfindung betrifft ein Verfahren zur Montage einer Filteranordnung.

Eine derartige Filteranordnung dient allgemein zur Behandlung und Reinigung von Grundwasser. Hierzu werden in einem unterirdischen Schacht mehrere die Filteranordnung bildende Filtereinheiten in Abstand übereinander angeordnet, wobei mit den einzelnen Filtereinheiten im Boden vorhandenes Grundwasser gereinigt werden kann. Auch ist es möglich von den Filtereinheiten Wasser zu einer oberirdischen Wasseraufbereitungseinheit über geeignete Rohrsysteme mit zugeordneten Pumpen zuzuführen.

Um eine fehlerfreie Funktion der einzelnen Filtereinheiten zu gewährleisten, und insbesondere um hydraulische Kurzschlüsse der den einzelnen Filtereinheiten zugeordneten Pumpen zu vermeiden, sind zwischen benachbarten Filtereinheiten im Schacht wasserdichte Abschlüsse vorgesehen. Diese wasserdichten Abschlüsse sind bei bekannten Filteranordnungen in Form von pneumatischen Packern ausgebildet. Derartige pneumatische Packer bilden aufblasbare Einheiten, wobei ein pneumatischer Packer im aufgeblasenen Zustand einen im Zwischenraum zwischen zwei benachbarten Filtereinheiten wasserdichten, sich über den gesamten Querschnitt des Schachts erstreckenden Abschluss bildet.

Ein Nachteil derartiger pneumatischer Packer besteht darin, dass deren Installation relativ aufwändig ist. Zudem ist nachteilig, dass die pneumatische Packer in regelmäßigen Zeitintervallen gewartet werden müssen, was einen weiteren unerwünschten Zeit- und Bearbeitungsaufwand mit sich bringt. Zudem sind derartige pneumatische Packer relativ teuer.

Weiterhin ist nachteilig, dass die pneumatischen Packer aus Materialien bestehen, die nicht resistent gegen im Wasser vorhandene Chemikalien sind. Dies bedeutet, dass die sich pneumatischen Packer im Laufe der Zeit zersetzen und ausgetauscht werden müssen.

Schließlich besteht ein wesentlicher Nachteil von pneumatischen Packern aufweisenden Filteranordnungen darin, dass die Anzahl der Filtereinheiten begrenzt ist, da nicht beliebig viele Pumpen in den jeweiligen Förderrohren vorgesehen werden. Dies beruht insbesondere darauf, dass die Pumpen im unteren Bereich der Förderrohre aufwändig installiert werden müssen.

Die US 5 646 337 A betrifft ein Verfahren und eine Vorrichtung zur Messung von Parametern in einem Erdreich. In das Erdreich wird ein Loch eingearbeitet, in welches ein Rohr eingeführt wird. Mit dem Rohr wird Grundwasser an verschiedenen Orten im Erdreich gefördert. Das Rohr umfasst mehrere geschlossene Kammern, die zum Erdreich hin mit Filtern abgeschlossen sind. Über die Filter wird Wasser dem Rohr zugeführt.

Die EP 0 648 914 A1 betrifft eine Vorrichtung zur Beeinflussung von im Erdreich befindlicher Flüssigkeit mittels eines in das Erdreich eingebrachten Brunnenschachts, der durch mindestens eine Trennwandung in mehrere Schachtbereiche aufgeteilt ist und in den zur Erzeugung einer größeren Filterfläche für die Flüssigkeit mehrere, mit einer teilweise flüssigkeitsdurchlässigen Wandung und mindestens teilweise mit einer Flüssigkeitsfördereinrichtung versehene Brunnenrohre zur Erzeugung mindestens eines Flüssigkeitskreislaufs eingeführt sind, die, sofern sie durch mehrere Schachtbereiche geführt sind, in Höhe der Schachttrennwandung ebenfalls eine Trennwandung aufweisen.

Die DE 295 18 645 U1 betrifft eine Vorrichtung zur tiefenhorizontierten Grundwasserprobenahme in einem Pegel-Brunnenrohr, in dem in mehreren Entnahmehorizonten Entnahmevorrichtungen, bestehend aus Steigleitungen, Unterwassermotorpumpen und Stromzuführungen eingebaut sind, dadurch gekennzeichnet, dass das Brunnenrohr im Bereich der Entnahmehorizonte als Filterrohr ausgebildet ist und die Pumpen innerhalb des Filterrohres angeordnet sind und dass die Steigleitungen, die Pumpen und die Stromzuführungen an einer demontierbaren Deckelanordnung gehaltert sind.

Der Erfindung liegt die Aufgabe zugrunde, ein verbessertes Verfahren zur Montage einer Filteranordnung bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft ein Verfahren zur Montage einer Filteranordnung mit einer modularen Anordnung von in einem Rohr in Abstand übereinander angeordneten Filtereinheiten, wobei das Rohr in einem unterirdischen Schacht angeordnet ist. Die Filtereinheiten bilden wasserdurchlässige Wandsegmente des Rohrs aus, über welche ein Wasseraustausch mit einem das Rohr umgebenden Erdreich erfolgen kann. Innerhalb des Rohrs ist eine konzentrische Anordnung von Förderrohren vorgesehen. Alternativ sind außerhalb des Rohrs verlaufende periphere Förderrohre vorgesehen. Die Förderrohre verlaufen zur Oberfläche des Erdreichs und weisen dort Öffnungen auf, über welche Pumpen einführbar sind. Die Montage einer Pumpe erfolgt dadurch, dass eine Pumpe in einem Förderrohr über dessen Öffnung eingeführt und in eine einer Filtereinheit zugeordneten Sollposition abgesenkt wird.

Ein wesentlicher Vorteil der Erfindung besteht im modularen Aufbau der Filteranordnung. Die Anzahl und Art der Filtereinheiten, die zur Reinigung von in einem Erdreich vorhandenen Grundwasser vorgesehen ist, kann spezifisch an die Bodenbeschaffenheiten des Erdreichs angepasst werden, wodurch sich eine hohe Funktionalität der erfindungsgemäßen Filteranordnung ergibt.

Diese flexible Modularität wird erfindungsgemäß dadurch erreicht, dass Pumpen in die einzelnen Förderrohre von oben, das heißt über ihre an der Oberfläche des Erdreichs freiliegenden Öffnungen eingeführt werden können, wodurch eine besonders einfache Montage der Pumpen erzielt wird. Aufwändige unterirdische Montagen von Pumpen, die die Anzahl der installierbaren Pumpen und damit letztlich auch die Anzahl der Filtereinheiten in der Filteranordnung begrenzen, entfallen somit.

Die Montage erfolgt vorteilhaft einfach dadurch, dass eine Pumpe in einem Förderrohr in eine einer Filtereinheit zugeordnete Sollposition absenkbar ist.

Die Sollposition kann von einer Umlenkung der Förderrohre gebildet sein. Auch können von der Innenwand des Förderrohrs Lagefixiermittel wie zum Beispiel Stege hervorstehen, die die Sollpositionen definieren.

Allgemein ist ein Förderrohr, in welches eine Pumpe eingeführt ist, zur Ausleitung von Wasser ausgebildet.

Das Förderrohr bildet dann ein Pumprohr aus, mit dem Wasser von einer Filtereinheit nach oben gepumpt wird und insbesondere einer oberirdisch angeordneten Behandlungsstation, das heißt in einer Wasseraufbereitungseinheit zugeführt wird.

Vorteilhaft befindet sich die untere Ausmündung des Förderrohrs im Bereich einer Filtereinheit, so dass von dort Wasser abgepumpt werden kann.

Weiterhin sind Förderrohre zur Einleitung von Wasser ausgebildet.

In diesem Fall sind oberirdisch Pumpen angeordnet, die Wasser, insbesondere nach einer Behandlung in einer Behandlungsstation im Förderrohr nach unten pumpen und so einer Filtereinheit zuführen, wobei auch in diesem Fall vorteilhaft die Ausmündung im Bereich einer Filtereinheit liegt.

Aufgrund der entsprechenden Ausbildung der Förderrohre derart, dass diese generell eine obere Ausmündung, die oberhalb der Erdoberfläche ausmündet, und eine untere Ausmündung im Bereich einer Filtereinheit aufweisen, können diese wahlweise zur Einleitung oder Ausleitung von Wasser zu oder von einer Filtereinheit verwendet werden, wobei die Konfiguration bei Bedarf jederzeit geändert werden kann, was eine flexible Anpassung an unterschiedliche Applikationen ermöglicht. Zur Konfiguration eines Förderrohrs zur Einleitung von Wasser, das heißt zur Konfiguration als Pumprohr, braucht lediglich eine Pumpe in dieses eingeführt werden.

Gemäß einer vorteilhaften Ausführungsform sind die Filtereinheiten in voneinander wasserdicht separierten Kammern angeordnet.

Dabei ist zweckmäßig, dass jeweils ein Förderrohr einer Kammer zugeordnet ist.

Durch die wasserdichte Trennung der einzelnen Filtereinheiten ist gewährleistet, dass jede Filtereinheit unbeeinflusst an den jeweils anderen Filtereinheiten arbeiten kann. Weiterhin werden auf diese Weise auch hydraulische Kurzschlüsse zwischen den Filtereinheiten vermieden.

Gemäß einer konstruktiv vorteilhaften Ausgestaltung verlaufen die Längsachsen der Förderrohre parallel zur Längsachse des Rohrs, wobei die Längsachse des Rohrs und damit des Schachts in vertikaler Richtung verläuft.

Die Förderrohre und das Rohr bestehen vorteilhaft aus Edelstahl. Die Filtereinheiten können aus Kunststoff oder einem metallischen Werkstoff bestehen. Vorteilhaft sind die Filtereinheiten in Form von Wickeldrahtfiltern ausgebildet.

Die wasserundurchlässigen Wandsegmente des Rohrs sind von einem wasserdichten Material umgeben, wobei sich herfür insbesondere ein Quellmaterial wie Bentonit eignet. Die wasserdurchlässigen, von den Filtereinheiten gebildeten Wandsegmente des Rohrs sind von einem wasserdurchlässigen Material wie zum Beispiel Kies umgeben.

Gemäß einer ersten Variante der Erfindung weist die Filteranordnung periphere Förderrohre, das heißt außerhalb des die Filtereinheiten aufnehmenden Rohrs verlaufende Förderrohre auf.

Die Förderrohre verlaufen dabei parallel in Abstand zueinander und zum Rohr. Vorteilhaft bilden die peripheren Förderrohre eine zum Rohr rotationssymmetrische Anordnung.

Bei dieser Variante der Erfindung sind vorteilhaft die Kammern durch Trennplatten wasserdicht getrennt.

Die Trennplatten bestehen vorzugsweise aus Edelstahl und erstrecken sich über die gesamte Querschnittsfläche des Rohrs. Vorzugsweise sind die Trennplatten an der Innenwand des Rohrs angeschweißt.

In den durch die Trennwände getrennten Kammern befindet sich jeweils nur eine Filtereinheit. Zweckmäßig münden die peripheren Förderrohre jeweils unterhalb einer Filtereinheit in das Rohr ein.

Gemäß einer zweiten Variante der Erfindung weist die Filteranordnung eine konzentrische Anordnung von innerhalb des Rohrs verlaufenden Förderrohre auf, wobei diese symmetrisch zur Längsachse, das heißt Symmetrieachse des Rohrs angeordnet sind.

Dabei münden die konzentrischen Förderrohre mit ihren oberen Enden oberhalb der Oberfläche des Erdreichs, in welchem der Schacht eingearbeitet ist, aus.

Weiterhin liegen die unteren Enden der konzentrischen Förderrohre in unterschiedlichen Höhenlagen und sind dabei jeweils einer Filtereinheit zugeordnet.

Somit ist jeweils ein Förderrohr einer Filtereinheit zugeordnet, wobei die einzelnen Filtereinheiten wieder wasserdicht entkoppelt sind. Vorteilhaft liegen die Ausmündungen der unteren Enden der Förderrohre dicht oberhalb der Filtereinheiten.

Gemäß einer vorteilhaften Ausführungsform sind die konzentrischen Förderrohre jeweils in einem an der Innenwand des Rohrs befestigten Zentriereinsatz gelagert.

Dabei ist an der Außenwand eines Förderrohrs ein Dichtkegel vorgesehen, der in eine zentrale Öffnung des zugeordneten Zentriereinsatzes einführbar ist.

Die Montage eines Förderrohrs innerhalb des Rohrs erfolgt somit einfach dadurch, dass das Förderrohr von oben in das Rohr eingeführt und dann in die Öffnung des zugeordneten Zentriereinsatzes eingeführt wird. Dabei verriegelt der Dichtkegel am Förderrohr die Öffnung im Zentriereinsatz und sorgt so für eine selbsttätige Lagefixierung des Förderrohrs, ohne dass hierzu weitere Arbeitsvorgänge notwendig sind.

Weiterhin bildet ein Zentriereinsatz mit dem zugeordneten Dichtkegel ein wasserdichtes Trennelement, wobei mit diesem Kammern mit Filtereinheiten wasserdicht separiert sind.

Die Montage dieser Filteranordnungen erfolgt derart, dass zunächst das Rohr im Schacht positioniert wird. Dabei sind an der Innendwand des Rohrs die einzelnen Zentriereinsätze in unterschiedlichen Höhenstufen als vormontierte Einheiten befestigt.

In einem ersten Schritt wird das Förderrohr mit dem kleinsten Außendurchmesser im Rohr montiert, wobei dieses mit dem Dichtkegel am untersten Zentriereinsatz fixiert wird. In diesem Bereich mündet das untere Ende des ersten Förderrohrs aus.

Dann erfolgt die Montage des zweiten Förderrohrs, dessen Außendurchmesser größer als der Außendurchmesser des ersten Förderrohrs ist. Das zweite Förderrohr umgibt das erste Förderrohr, wobei die Seitenwände der Förderrohre in Abstand zueinander liegen. Das zweite Förderrohr wird an dem zweituntersten Zentriereinsatz lagefixiert. In diesem Bereich mündet das untere Ende des zweiten Förderrohrs aus. In entsprechender Weise werden die weiteren Förderrohre montiert, wobei allgemein das n-te Förderrohr das (n-1)te Förderrohr umgibt und das n-te Förderrohr im n-ten Zentriereinsatz lagefixiert wird, der oberhalb des (n-1)ten Zentriereinsatzes liegt.

Die Erfindung wird im Folgenden anhand der Zeichnungen erläutert. Es zeigen:
- Figur 1:: Beispiel einer ersten Variante der erfindungsgemäßen Filteranordnung.
- Figur 2:: Beispiel einer zweiten Variante der erfindungsgemäßen Filteranordnung.
- Figur 3a:: Detaildarstellung der Anordnung gemäß Figur 2 mit einem Zentriereinsatz und einem zugeordneten Dichtkegel an einem Förderrohr.
- Figur 3b:: Anordnung gemäß Figur 3a bei im Zentriereinsatz fixierten Dichtkegel.

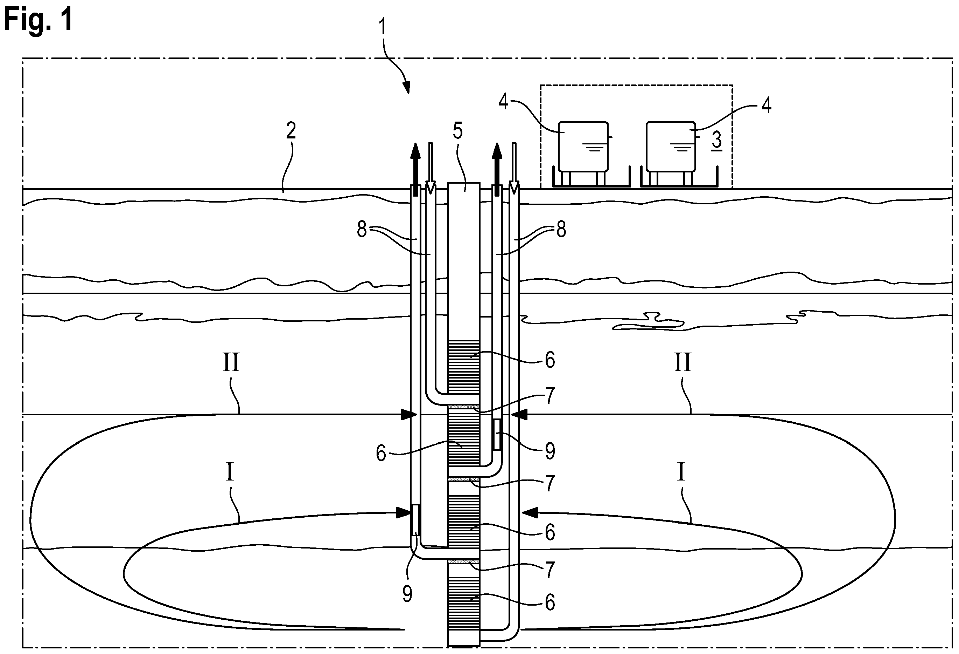

Figur 1 zeigt ein Beispiel einer ersten Variante der erfindungsgemäßen Filteranordnung 1. Diese ist in einem unterirdischen Schacht integriert, der in ein Erdreich 2 eingearbeitet ist und an der Oberfläche des Erdreichs 2 ausmündet. Der Filteranordnung 1 ist eine oberirdisch angeordnete Wasseraufbereitungseinheit 3 zugeordnet, die typischerweise mehrere Behandlungsstationen 4 zur Aufbereitung von im Erdreich 2 vorhandenen Grundwasser dient.

Die im Schacht angeordnete Filteranordnung 1 weist ein zylindrisches Rohr 5 auf, dessen Längsachse in vertikaler Richtung verläuft. Das Rohr 5 besteht vorteilhaft aus Edelstahl.

Im Rohr 5 sind mehrere Filtereinheiten 6 in Abstand übereinander angeordnet. Die Filtereinheiten 6 können aus Kunststoff, Stahl oder sonstigen metallischen Werkstoffen bestehen. Im vorliegenden Fall sind die Filtereinheiten 6 als Wickeldrahtfilter ausgebildet. In den Filtereinheiten 6 werden physikalische Behandlungen wie zum Beispiel Absorptionsprozesse zur Filterung von Schadstoffen durchgeführt.

Wie Figur 1 zeigt, bilden die Außenseiten der Filtereinheiten 6 Wandsegmente des Rohrs 5. Diese sind wasserdurchlässig. Die weiteren Wandsegmente sind wasserundurchlässig.

Die wasserundurchlässigen Wandsegmente sind mit wasserundurchlässigem Material, insbesondere einem Quellmaterial wie Bentonit umgeben.

Dagegen sind die von den Filtereinheiten 6 gebildeten wasserdurchlässigen Wandsegmente des Rohrs 5 von einem wasserdurchlässigen Material wie zum Beispiel Kies umgeben. Dadurch ist ein Wasseraustausch zwischen den Filtereinheiten 6 und dem Erdbereich ermöglicht, das heißt es kann Grundwasser aus dem Erdreich 2 den Filtereinheiten 6 zugeführt werden, oder es kann aufbereitetes Wasser von den Filtereinheiten in das Erdreich geleitet werden, wobei die Strömungsrichtung des Wassers abhängig vom Wasserdruck in den Filtereinheiten 6 ist. Eine beispielhafte Wasserzirkulation ist in Figur 1 mit Pfeilen I, II gekennzeichnet.

Die einzelnen Filtereinheiten 6 sind in voneinander wasserdicht separierten Kammern einzeln angeordnet. Zur Ausbildung dieser Kammern sind in vorliegenden Trennplatten 7 aus Edelstahl vorgesehen, die an die Innendwand des Rohrs 5 angeschweißt sind.

Wie Figur 1 zeigt, weist die Filteranordnung 1 eine Anordnung von peripheren, das heißt außerhalb des Rohrs 5 verlaufenden Förderrohren 8 auf. Die Längsachsen der Förderrohre 8 verlaufen parallel zueinander und parallel zur Längsachse des Rohrs 5. Die Förderrohre 8 sind in Abstand zueinander und in Abstand zum Rohr 5 angeordnet, wobei die Förderrohre 8 insbesondere eine rotationssymmetrische Anordnung derart bilden, dass benachbarte Förderrohre 8 jeweils um dieselben Winkel versetzt zueinander angeordnet sind.

Die oberen Enden der Förderrohre 8 münden dicht oberhalb der Oberfläche des Erdreichs 2 aus. Die unteren Enden der Förderrohre 8 münden in das Rohr 5 ein. Dabei ist jedes Förderrohr 8 jeweils einer Filtereinheit 6 zugeordnet. Wie Figur 1 zeigt, mündet jedes Förderrohr 8 dicht unterhalb der zugeordneten Filtereinheiten 6 in das Rohr 5 ein.

In die Förderrohre 8 können Pumpen 9 von oben über ihre Ausmündungen eingeführt werden. Figur 1 zeigt eine Anordnung, bei der in zwei der Förderrohre 8 eine Pumpe 9 eingeführt ist. Die Pumpe 9 ist im unteren Teil des Förderrohrs 8 im Bereich der zugeordneten Filtereinheiten 6 in einer Sollposition gehalten. Die Sollposition kann durch die Umlenkung des Förderrohrs 8 definiert sein. Alternativ können an der Innenwand des Förderrohrs 8 Halterungen wie zum Beispiel Stege zur Vorgabe der Sollposition vorgesehen sein.

Durch die Einführung einer Pumpe 9 in ein Förderrohr 8 wird ein Pumprohr derart gebildet, dass Wasser aus der jeweiligen Kammer mit der Filtereinheit 6 nach oben gepumpt und aus dem Pumprohr der Wasseraufbereitungseinheit 3 zugeführt wird um dort eine Behandlung dieses Wassers, insbesondere in Form chemischen, physikalischen oder biologischen Behandlungen, durchzuführen.

Die anderen Förderrohre 8, in welche keine Pumpen 9 eingeführt sind, bilden Infiltrationsrohre. Über eine oberirdische Pumpenanordnung wird Wasser aus der Wasseraufbereitungseinheit 3 in die Förderrohre 8 gepumpt und den zugeordneten Filtereinheiten 6 zugeführt.

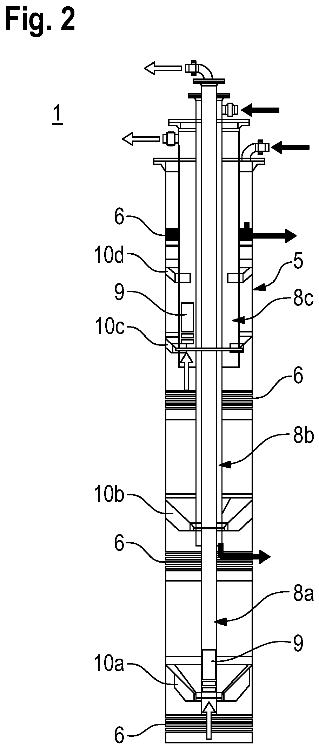

Figur 2 zeigt ein Beispiel einer zweiten Variante der erfindungsgemäßen Filteranordnung 1. Diese Filteranordnung 1 ist in identischer Weise wie die Filteranordnungen 1 gemäß Figur 1 in einen Schacht im Erdreich 2 integriert und an eine oberirdische Wasseraufbereitungseinheit 3 angebunden.

Auch die Filteranordnung 1 gemäß Figur 2 weist ein Rohr 5 auf, in welchem mehrere Filtereinheiten 6 in Abstand übereinander angeordnet sind. Die Filtereinheiten 6 bilden wieder wasserdurchlässige Wandsegmente des Rohrs 5, welche an der Unterseite des Rohrs 5 mit einem wasserdurchlässigen Material wie Kies umgeben sind. Die restlichen Wandsegmente des Rohrs 5 sind wasserundurchlässig und entsprechend an der Außenseite des Rohrs 5 mit einem wasserundurchlässigen Material wie Bentonit umgeben.

Bei der Filteranordnung 1 gemäß Figur 2 ist innerhalb des Rohrs 5 eine konzentrische Anordnung von Förderrohren 8a - 8c vorgesehen, deren Längsachsen mit der Längsachse des Rohrs 5 zusammenfallen.

Die einzelnen Förderrohre 8 sind in Zentriereinsätzen 10a-d gelagert, die an der Innenwand des Rohrs 5 befestigt sind. Die Zentriereinsätze 10a - 10d weisen im vorliegenden Fall die Form von Zentriertrichtern auf.

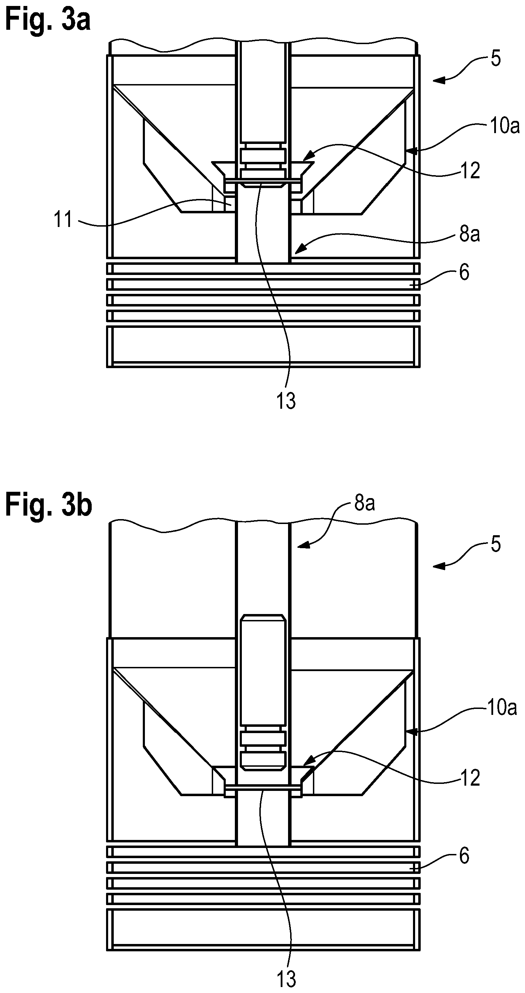

Die Figuren 3a und 3b zeigen eine Detaildarstellung des untersten Zentriereinsatzes 10a mit dem zugeordneten innersten Förderrohr 8, in deren unteren Bereich eine Pumpe 9 gelagert ist. Analog zur Ausführungsform gemäß Figur 1 können Pumpen 9 von oben in Förderrohre 8 eingeführt werden und dann in einer Sollposition nahe der zugeordneten Filtereinheit 6 lagefixiert werden.

Wie insbesondere aus Figur 3a ersichtlich, ist im Bereich des Bodens des sich nach oben verbreiternden Trichters des Zentriereinsatzes eine zentrale Öffnung 11 vorgesehen.

Korrespondierend hierzu ist an der Außenseite des Förderrohrs 8a ein Dichtkegel 12 befestigt, dessen Außenkontur an die Randkontur der Öffnung 11 angepasst ist. Der Dichtkegel 12 weist als Dichtelement einen O-Ring 13 auf.

Die Montage des Förderrohrs 8a erfolgt dadurch, dass der untere Bereich des Förderrohrs 8a in die Öffnung 11 des Zentriereinsatzes 10a eingeführt wird, bis der Dichtkegel 12 an dem die Öffnung 11 begrenzenden Randbereichs des Zentriereinsatzes aufsitzt und dort lagefixiert ist. Insbesondere durch den O-Ring 13 schließt der Dichtkegel 12 die Öffnung 11 dicht. Das Förderrohr 8 ist durch die Pumpe 9 ein Pumprohr, über welches Wasser von den untersten Filtereinheiten 6 nach oben zur Wasseraufbereitungseinheit 3 gepumpt wird.

Die weiteren Förderrohre 8b - 8c weisen entsprechende Dichtkegel 12 auf und werden mit diesen in Öffnungen 11 von zugeordneten Zentriereinsätzen 10b - 10d eingesetzt und so lagefixiert.

Wie Figur 2 zeigt, liegt der unterste Zentriereinsatz oberhalb der untersten Filtereinheit 6 und separiert diese wasserdicht von den anderen Filtereinheiten 6.

Das zweite Förderrohr 8b umschließt das erste Förderrohr 8c und ist mit einem Dichtkegel 12 in dem zweituntersten Zentriereinsatz 10b gelagert. Das untere Ende des Förderrohrs 8b liegt dicht oberhalb der zweituntersten Filtereinheit 6.

Zwischen dem untersten Zentriereinsatz 10a und dem zweituntersten Zentriereinsatz 10b wird eine wasserdichte Kammer gebildet, in dem sich allein die zweitunterste Filtereinheit 6 befindet. Über das zweite Förderrohr 8b erfolgt eine Zufuhr von Wasser zu dieser Filtereinheit 6 in dem Wasser von oben in dieses Förderrohr 8 eingepumpt wird.

Die zweitoberste Filtereinheit 6 liegt in einer wasserdichten Kammer zwischen dem Zentriereinsatz 10b und dem Zentriereinsatz 10c, in welchem das dritte Förderrohr 8c gelagert ist. Dieses Förderrohr 8c mündet dicht oberhalb der zweitobersten Filtereinheit 6. In diesem Förderrohr 8c ist eine Pumpe 9 eingebracht, so dass dieses ein Pumprohr bildet mit dem Wasser von dieser Filtereinheit 6 nach oben gepumpt und der Wasseraufbereitungseinheit 3 zugeführt wird.

Schließlich bildet der Zentriereinsatz 10d mit dem oberen Randbereich des Rohrs 5 eine weitere wasserdichte Kammerin welcher die oberste Filtereinheit 6 gelagert ist. Dieser Filtereinheit 6 wird von oben Wasser zugeführt.

Die Montage der Filteranordnung 1 gemäß Figur 2 erfolgt derart, dass nach Installation des Rohrs 5 im Schacht zunächst das Förderrohr 8a, dann das Förderrohr 8b und schließlich das Förderrohr 8c montiert wird.

### Bezugszeichenliste

- (1): Filteranordnung
- (2): Erdreich
- (3): Wasseraufbereitungseinheit
- (4): Behandlungsstation
- (5): Rohr
- (6): Filtereinheit
- (7): Trennplatte
- (8): Förderrohr
- (8a-c): Förderrohr
- (9): Pumpe
- (10a-d): Zentriereinsatz
- (11): Öffnung
- (12): Dichtkegel
- (13): O-Ring
- I): Pfeil
- II): Pfeil

## Patentansprüche

1. Verfahren zur Montage einer Filteranordnung (1) mit einer modularen Anordnung von in einem Rohr (5) in Abstand übereinander angeordneten Filtereinheiten (6), wobei das Rohr (5) in einem unterirdischen Schacht angeordnet ist, und wobei die Filtereinheiten (6) wasserdurchlässige Wandsegmente des Rohrs (5) ausbilden, über welche ein Wasseraustausch mit einem das Rohr (5) umgebenden Erdreich (2) erfolgen kann, **dadurch gekennzeichnet, dass** innerhalb des Rohrs (5) eine konzentrische Anordnung von Förderrohren (8) vorgesehen ist, oder dass außerhalb des Rohrs (5) verlaufende periphere Förderrohre (8) vorgesehen sind, wobei die Förderrohre (8) zur Oberfläche des Erdreichs (2) verlaufen und dort Öffnungen (11) aufweisen, über welche Pumpen (9) einführbar sind, wobei die Montage einer Pumpe (9) dadurch erfolgt, dass eine Pumpe (9) in einem Förderrohr (8) über dessen Öffnung (11) eingeführt und in eine einer Filtereinheit (6) zugeordneten Sollposition abgesenkt wird

2. Verfahren nach Anspruch 1, **dadurch gekennzeichnet, dass** ein Förderrohr (8), in welches eine Pumpe (9) eingeführt wird zur Ausleitung von Wasser ausgebildet ist.

3. Verfahren nach Anspruch 2, **dadurch gekennzeichnet, dass** Förderrohre (8) zur Einleitung von Wasser vorgesehen sind.

4. Verfahren nach einem der Ansprüche 1 - 3, **dadurch gekennzeichnet, dass** die Filtereinheiten (6) in voneinander wasserdicht separierten Kammern angeordnet sind.

5. Verfahren nach Anspruch 4, **dadurch gekennzeichnet, dass** jeweils ein Förderrohr (8) einer Kammer zugeordnet ist.

6. Verfahren nach einem der Ansprüche 1 - 5, **dadurch gekennzeichnet, dass** die Längsachsen der Förderrohre (8) parallel zur Längsachse des Rohrs (5) verlaufen.

7. Verfahren nach einem der Ansprüche 1 - 6, **dadurch gekennzeichnet, dass** die Filtereinheiten (6) in Form von Wickeldrahtfiltern ausgebildet sind.

8. Verfahren nach einem der Ansprüche 1 - 7, **dadurch gekennzeichnet, dass** die peripheren Förderrohre (8) jeweils um dieselben Winkel versetzt zueinander angeordnet sind.

9. Verfahren nach einem der Ansprüche 1 - 8, **dadurch gekennzeichnet, dass** die peripheren Förderrohre (8) jeweils unterhalb einer Filtereinheit (6) in das Rohr (5) einmünden.

10. Verfahren nach einem der Ansprüche 8 oder 9, **dadurch gekennzeichnet, dass** die Kammern durch Trennplatten (7) wasserdicht getrennt sind.

11. Verfahren nach einem der Ansprüche 1 - 7, **dadurch gekennzeichnet, dass** die konzentrischen Förderrohre (8) mit ihren oberen Enden oberhalb der Oberfläche des Erdreichs (2), in welchem der Schacht eingearbeitet ist, ausmünden.

12. Verfahren nach Anspruch 11, **dadurch gekennzeichnet, dass** die unteren Enden der konzentrischen Förderrohre (8) in unterschiedlichen Höhenlagen liegen und dabei jeweils einer Filtereinheit (6) zugeordnet sind.

13. Verfahren nach einem der Ansprüche 11 oder 12, **dadurch gekennzeichnet, dass** die konzentrischen Förderrohre (8) jeweils in einem an der Innenwand des Rohrs (5) befestigten Zentriereinsätze (10a - d) gelagert werden.

14. Verfahren nach Anspruch 13, **dadurch gekennzeichnet, dass** an der Außenwand eines Förderrohrs (8) ein Dichtkegel (12) vorgesehen ist, der in eine zentrale Öffnung (11) des zugeordneten Zentriereinsatzes (10a - d) eingeführt wird.

15. Verfahren nach Anspruch 14, **dadurch gekennzeichnet, dass** ein Zentriereinsatz (10a - d) mit dem zugeordneten Dichtkegel (12) ein wasserdichtes Trennelement bildet, mit den Kammern mit Filtereinheiten (6) wasserdicht separiert werden.

## Claims

1. Method for mounting a filter assembly (1) with a modular arrangement of filter units (6) arranged at a distance above each other in a pipe (5), wherein the pipe (5) is arranged in an underground shaft, and wherein the filter units (6) form water-permeable wall segments of the pipe (5) through which water can be exchanged with soil (2) surrounding the pipe (5), **characterised in that** a concentric arrangement of conveying pipes (8) is provided inside the pipe (5), or that peripheral conveying pipes (8) extending outside the pipe (5) are provided, wherein the conveying pipes (8) extend to the surface of the soil (2) and have openings (11) through which pumps (9) can be inserted, wherein a pump (9) is installed by inserting a pump (9) into a conveying pipe (8) through its opening (11) and lowering it into a target position assigned to a filter unit (6).

2. Method according to claim 1, **characterised in that** a delivery pipe (8) into which a pump (9) is inserted is designed for the discharge of water.

3. Method according to claim 2, **characterised in that** delivery pipes (8) are provided for introducing water.

4. Method according to any of claims 1-3, **characterised in that** the filter units (6) are arranged in chambers separated from each other in a watertight manner.

5. Method according to claim 4, **characterised in that** each chamber is assigned a delivery pipe (8).

6. Method according to one of claims 1-5, **characterised in that** the longitudinal axes of the feed pipes (8) run parallel to the longitudinal axis of the pipe (5).

7. Method according to one of claims 1-6, **characterised in that** the filter units (6) are designed as wound wire filters.

8. Method according to one of claims 1-7, **characterised in that** the peripheral conveying pipes (8) are each offset from one another by the same angle.

9. Method according to one of claims 1-8, **characterised in that** the peripheral conveying pipes (8) each open into the pipe (5) below a filter unit (6).

10. Method according to one of claims 8 or 9, **characterised in that** the chambers are separated by partition plates (7) in a watertight manner.

11. Method according to one of claims 1-7, **characterised in that** the concentric conveying pipes (8) open out with their upper ends above the surface of the soil (2) in which the shaft is embedded.

12. Method according to claim 11, **characterised in that** the lower ends of the concentric conveyor pipes (8) are located at different heights and are each assigned to a filter unit (6).

13. Method according to one of claims 11 or 12, **characterised in that** the concentric conveying pipes (8) are each mounted in a centring insert (10a - d) fixed to the inner wall of the pipe (5).

14. Method according to claim 13, **characterised in that** a sealing cone (12) is provided on the outer wall of a conveying pipe (8), which is inserted into a central opening (11) of the associated centring insert (10a - d).

15. Method according to claim 14, **characterised in that** a centring insert (10a - d) forms a watertight separating element with the associated sealing cone (12), with the chambers being separated in a watertight manner by filter units (6).

## Revendications

1. Procédé de montage d'un agencement de filtre (1) comprenant un agencement modulaire d'unités de filtration (6) disposées à distance les unes au-dessus des autres dans un tube (5), le tube (5) étant disposé dans un puits souterrain et les unités de filtration (6) formant des segments de paroi perméables à l'eau du tube (5) à travers lesquels un échange d'eau peut avoir lieu avec la terre (2) entourant le tube (5), **caractérisé en ce qu'**à l'intérieur du tube (5) est prévu un agencement concentrique de tubes de transport (8), ou **en ce qu'**à l'extérieur du tube (5) sont prévus des tubes de transport périphériques (8) s'étendant à l'extérieur du tube (5), les tubes de transport (8) s'étendent jusqu'à la surface du sol (2) et présentent à cet endroit des ouvertures (11) à travers lesquelles des pompes (9) peuvent être introduites, le montage d'une pompe (9) s'effectuant en introduisant une pompe (9) dans un tube de transport (8) à travers son ouverture (11) et en l'abaissant dans une position de consigne associée à une unité de filtration (6).

2. Procédé selon la revendication 1, **caractérisé en ce qu'**un tube de transport (8) dans lequel une pompe (9) est introduite est conçu pour évacuer l'eau.

3. Procédé selon la revendication 2, **caractérisé en ce que** des tubes de transport (8) sont prévus pour l'introduction d'eau.

4. Procédé selon l'une des revendications 1 à 3, **caractérisé en ce que** les unités de filtration (6) sont disposées dans des chambres séparées les unes des autres de manière étanche à l'eau.

5. Procédé selon la revendication 4, **caractérisé en ce qu'**un tube de transport (8) est associé à chaque chambre.

6. Procédé selon l'une des revendications 1 à 5, **caractérisé en ce que** les axes longitudinaux des tubes de transport (8) sont parallèles à l'axe longitudinal du tube (5).

7. Procédé selon l'une des revendications 1 à 6, **caractérisé en ce que** les unités de filtration (6) sont réalisées sous forme de filtres à fil enroulé.

8. Procédé selon l'une des revendications 1 à 7, **caractérisé en ce que** les tubes de transport périphériques (8) sont décalés les uns par rapport aux autres du même angle.

9. Procédé selon l'une des revendications 1 à 8, **caractérisé en ce que** les tubes de transport périphériques (8) débouchent chacun dans le tube (5) en dessous d'une unité de filtration (6).

10. Procédé selon l'une des revendications 8 ou 9, **caractérisé en ce que** les chambres sont séparées de manière étanche à l'eau par des plaques de séparation (7).

11. Procédé selon l'une des revendications 1 à 7, **caractérisé en ce que** les tubes de transport concentriques (8) débouchent par leurs extrémités supérieures au-dessus de la surface du sol (2) dans lequel le puits est creusé.

12. Procédé selon la revendication 11, **caractérisé en ce que** les extrémités inférieures des tubes de transport concentriques (8) se trouvent à différentes hauteurs et sont chacune associées à une unité de filtration (6).

13. Procédé selon l'une des revendications 11 ou 12, **caractérisé en ce que** les tubes de transport concentriques (8) sont chacun montés dans un insert de centrage (10a - d) fixé à la paroi intérieure du tube (5).

14. Procédé selon la revendication 13, **caractérisé en ce qu'**un cône d'étanchéité (12) est prévu sur la paroi extérieure d'un tube de transport (8), lequel cône est introduit dans une ouverture centrale (11) de l'insert de centrage associé (10a - d).

15. Procédé selon la revendication 14, **caractérisé en ce qu'**un insert de centrage (10a - d) forme avec le cône d'étanchéité associé (12) un élément de séparation étanche à l'eau, les chambres avec les unités de filtration (6) étant séparées de manière étanche à l'eau.
